(19) Europäisches Patentamt
European Patent Office
Office européen des brevets

(11) Publication number: **0 215 256 A1**

# (12) EUROPEAN PATENT APPLICATION

(21) Application number: 86110619.3

(22) Date of filing: 31.07.86

(51) Int. Cl.⁴: C08F 236/10 , C08F 4/48

(30) Priority: 03.09.85 US 771749

(43) Date of publication of application: 25.03.87 Bulletin 87/13

(84) Designated Contracting States: BE DE FR GB IT NL

(71) Applicant: THE FIRESTONE TIRE & RUBBER COMPANY
1200 Firestone Parkway
Akron, Ohio 44317(US)

(72) Inventor: Hall, James E.
2940 Mayfair Road
Akron OH 44312(US)
Inventor: Malani, Shrikant R.
460 Treeside Drive
AKron OH 44313(US)

(74) Representative: Kraus, Walter, Dr. et al
Patentanwälte Kraus, Weisert & Partner
Thomas-Wimmer-Ring 15
D-8000 München 22(DE)

## (54) Oligomeric oxolanyl alkanes as randomizers for copolymerization.

(57) A process is disclosed herein for preparing randomized copolymers of conjugated dienes and vinyl aromatic hydrocarbons by utilizing oligomeric oxolanyl alkanes in amounts which effectively promote the randomization of the copolymers so produced.

EP 0 215 256 A1

# OLIGOMERIC OXOLANYL ALKANES AS RANDOMIZERS FOR COPOLYMERIZATION

## BACKGROUND OF THE INVENTION

The use of oligomeric oxolanyl alkanes and hydrocarbyl alkali metal compounds such as butyllithium as co-initiators in the copolymerizations of dienes such as butadiene with styrene is well known as disclosed in U.S. 4,429,090 and U.S. 4,429,09l, to James E. Hall.

Styrene and l,3-butadiene form block copolymers when polymerized anionically in non-polar solvents. Modifiers for anionic polymerization are known which will randomize l,3-butadiene/styrene copolymerizations however many of these modifiers are not suitable for use at higher temperatures.

This invention relates to the use of oligomeric oxolanyl alkanes as randomizers for butadiene/styrene copolymerizations.

## SUMMARY OF THE INVENTION

A process is disclosed herein for preparing randomized copolymers of conjugated dienes and vinyl aromatic hydrocarbons by utilizing oligomeric oxolanyl alkanes in amounts which effectively promote the randomization of the copolymers so produced.

## DESCRIPTION OF THE INVENTION

According to this invention there is provided a process for preparing randomized copolymers which comprises contacting at least two different monomeric materials with an organolithium compound and an oligomeric oxolanyl alkane. At least one of the two monomers is selected from the group consisting of conjugated dienes having from four to l2 carbon atoms per molecule. The other monomer is selected from the group consisting of vinyl aromatic hydrocarbons having from eight to 20 carbon atoms per molecule.

The oligomeric oxolanyl alkane randomizing agents of the present invention are extremely stable at high polymerization temperatures such as temperatures exceeding 90°C thus allowing polymerizations to be run in an economical low cost manner while eliminating detrimental side reactions.

The oligomeric oxolanyl alkane is present in the polymerization reaction in a quantity sufficient to promote formation of random copolymers, it being considered that in the absence of the oligomeric oxolanyl alkane or other randomizers, substantially no random copolymers are produced but that block polymers are formed. The oligomeric oxolanyl alkane randomizers reduce or eliminate both terminal and branch blocking of the conjugated diene and vinyl aromatic hydrocarbons used to prepare the copolymers of the present invention.

In the preferred embodiment of this invention the two monomers, the conjugated dienes and the vinyl aromatic hydrocarbons, are present in a monomer ratio of from about 90 to l0 to about 40 to 60.

The oligomeric oxolanyl alkanes hereinafter alternatively referred to as oxolanyl alkanes which are used as randomizers in the present invention are represented by the structural formulas I and II:

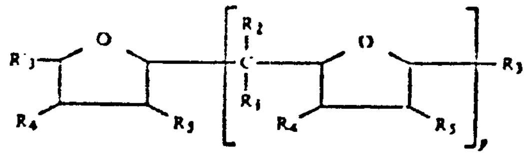

(I)

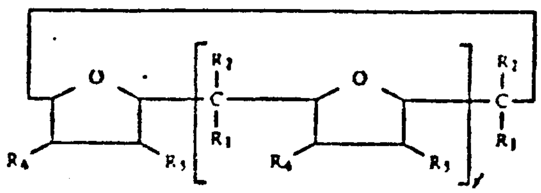

(II)

wherein $R_1$ and $R_2$ independently are hydrogen or an alkyl group and the total number of carbon atoms in $-CR_1R_2-$is between one and nine inclusive; y is an integer of I to 5 inclusive, y' is an integer of 3 to 5 inclusive, $R_{3'}$, $R_3$, $R_4$ and $R_5$ independently are -H or $-C_nH_{2n+1}$ wherein n = I to 6.

While the randomizers of structural formula I are linear oligomers and the modifiers represented by structural formula II are cyclic oligomers, hereinafter the term oxolanyl randomizers is contemplated to encompass the randomizers of both structural formulas.

The oxolanyl randomizers are prepared by methods known to those skilled in the art. Typically the modifiers are prepared by reacting furan, which is unsubstituted in either or both of the 2-or 5-positions, with either an aldehyde or a ketone, such as acetone, in the presence of an acid such as hydrochloric acid. Careful control of the reaction parameters allows for the production of a product containing up to 95 percent of dimers, trimers, and tetramers. Once the linear oligomers or cyclic structures are formed these reaction products are hydrogenated in the presence of suitable hydrogenation catalysts such as nickel based catalysts. Any suitable hydrogenation process known in the art may be employed to produce the randomizer compounds of structural formulas I or II.

While unsubstituted furans are the preferred reactant, 2-alkyl-furans containing up to six carbon atoms in the alkyl group can be employed in the production of the oxolanyl oligomers of structural formula I. When 2-alkyl-furans are employed in the production of randomizers furfuryl dimers are the main reaction product. The 2-alkyl-furan also may end cap any oligomers formed if furan is used as a coreactant.

The cyclic oxolanyl oligomer randomizer precursors are formed only by the reaction of a furan compound which is unsubstituted in the 2,5-position with one or more aldehydes, or one or more ketones, or a mixture thereof.

Suitable oligomeric randomizers for use in the catalyst system include but are not limited to: bis-(2-oxolanyl) methane; 2,2-bis(2-oxolanyl) propane; I,I-bis(2-oxolanyl) ethane; 2,2-bis(2-oxolanyl) butane; 2,2-bis(5-methyl-2-oxolanyl) propane; 2,2-bis-(3,4,5-trimethyl-2-oxolanyl) propane. These randomizer compounds represent a few of the dimer compounds represented by structural formula I and other linear and cyclic oligomer randomizers are apparent from their structural formulas.

The preferred oxolanyl randomizers for use in the present invention are the dimeric 2,2-bis(2-oxolanyl) propane and the trimeric 2,5-bis(2-oxolanyl-2-propyl) oxolane.

The oligomeric oxolanyl alkane can be introduced into the polymerization in any manner. It can be introduced together with hydrocarbyllithium initiator into the polymerization reaction or the oligomeric oxolanyl alkane can be introduced into the polymerization reaction mixture into which the hydrocarbyllithium has been introduced as an initiator. In either embodiment, the oligomeric oxolanyl alkanes can be employed individually or as mixtures with other oxolanyl alkanes.

The oligomeric oxolanyl alkanes employed in accordance with the method of this invention in polymerization reactions which are conducted under any of those reaction conditions conventionally employed in solution polymerization with hydrocarbyllithium initiators which involve the copolymerization of two monomeric materials, i.e., conjugated diolefins, including butadiene and isoprene and vinyl aromatic hydrocarbons such as styrene and related hydrocarbons. If the polymerization mixtures into which an oligomeric oxolanyl alkane has

been introduced are to be treated with polymer coupling agents or other reagents which depend upon the presence of terminal polymer-lithium groups, the coupling agent or other reagent should be added as soon as practicable, for example, within l5 minutes, after the desired monomer conversion has been attained.

Regardless of the method of their employment, that is, whether they are reacted with the hydrocarbyllithium and introduced in the form of the reaction product or whether they are introduced, as such, into the reaction mixture, the oligomer oxolanyl alkanes will be employed in quantities sufficient to provide from about 0.004 to about 2.0, preferably 0.006 to l.5, parts per l00 parts of monomers for polymers of l,000 to 500,000 $\bar{M}$ n.

If introduced into the reaction mixture as such, the oligomeric oxolanyl alkane is conveniently introduced in a hydrocarbon, e.g., hexane, solution.

As previously discussed at least one of the two monomers which is to be randomized in the present invention is selected from the group consisting of one or more conjugated dienes having from four to l2 carbon atoms per molecule. Examples thereof include the following: l,3-butadiene; isoprene; 2,3-dimethyl--l,3-butadiene; l,3-pentadiene (piperylene);2-methyl-3-ethyl-l,3-butadiene; 3-methyl-l,3-pentadiene; l,3-hexadiene; 2-methyl-l,3-hexadiene; 3-butyl-l,3-octadiene, and the like. Among the dialkylbutadienes, it is preferred that the alkyl groups contain from one to three carbon atoms. Numerous others are disclosed, for instance in U.S. Patent No. 3,377,404, the disclosure with respect to which is incorporated herein by reference. The preferred l,3-diene monomer for use in the present invention is butadiene.

In addition to the above described conjugated dienes, one or more suitable copolymerizable monomers such as vinyl-substituted aromatic monomers are incorporated into the polymerization mixture. Examples of suitable copolymerizable monomers for use in the preparation of copolymers in the present invention include: styrene; alpha-methylstyrene; l-vinylnaphthalene; 2-vinylnaphthalene; l-alpha-methylvinyl-naphthalene; 2-alpha-methylvinylnaphthalene; l,2-diphenyl-4-methylhexene-l; l,6-diphenyl-hexadiene-l,5; l,3-divinylbenzene; l,3,5-trivinylbenzene; l,3,5-triisopropenylbenzene; l,4-divinylbenzene; l,3-distyrylbenzene; l,4-distyrylbenzene; l,2-distyrylbenzene; and mixtures of these as well as alkyl, cycloalkyl, aryl alkaryl and aralkyl derivatives thereof in which the total number of carbon atoms in the combined hydrocarbon constitutes generally not greater than l2. Examples of these latter compounds include: 4-methylstyrene; vinyl toluene; 3,5-diethylstyrene; 2-ethyl-4-benzylstyrene; 4-phenylstyrene; 4-p-tolylstyrene; 2,4-divinyltoluene; 4,5-dimethyl-l-vinylnaphthalene; 2,4,6-trivinyltoluene; and 2,4,6-triisopropenyl-toluene. Again reference is made to U.S. Patent No. 3,377,404 for disclosures of additional vinyl-substituted aromatic compounds which are incorporated herein by reference.

In the process of the present invention the randomization of the conjugated dienes and vinyl-substituted aromatic monomers is effective in monomer ratios ranging from l0-50% vinyl-substituted aromatic hydrocarbons to 90-50% conjugated diene. The randomization process is especially effective when the monomer ratio is from 30-40% vinyl-substituted aromatic hydrocarbon to 70-60% conjugated diene.

Any organolithium catalyst which are known in the art as being useful in the polymerization of vinyl aromatic hydrocarbons and conjugated dienes can be employed in the present invention . Suitable catalysts which initiate polymerization of the monomer system include organolithium catalysts which have the formula $R(Li)_{x''}$ wherein R represents a hydrocarbyl radical of l to 20, preferably 2-8, carbon atoms per R group, and x" is an integer of l-4. Typical R groups include aliphatic radicals and cycloaliphatic radicals, such as alkyl, cycloalkyl, cycloalkylalkyl, alkylcycloalkyl, aryl and alkylaryl radicals.

Specific examples of R groups for substitution in the above formula include primary, secondary and tertiary groups such as methyl, ethyl, n-propyl, isopropyl, n-butyl, isobutyl, t-butyl, n-amyl, isoamyl, n-hexyl, n-octyl, n-dedyl, cyclopentyl-methyl, cyclohexyl-ethyl, cyclopentyl-ethyl, methyl-cyclopentylethyl, cyclopentyl, cyclohexyl, 2,2,l-bicycloheptyl, methylcyclopentyl, dimethylcyclopentyl, ethylcyclopentyl, methylcyclohexyl, dimethylcyclohexyl, ethylcyclohexyl, isopropylcyclohexyl, and the like.

Specific examples of other suitable lithium catalysts include:

phenyllithium, naphthyllithium, 4-butylphenyllithium, p-tolyllithium, 4-phenylbutyllithium; 4-butylcyclohexyllithium, 4-cyclohexylbutyllithium, l,4-dilithiobutane, l,l0-dilithiodecane, l,20-dilithioeicosane, l,4-dilithiobenzene, l,4-dilithionaphthalene, l,l0-dilithioanthracene, l,2-dilithio-l,2-diphenylethane, l,3,5-trilithiopentane, l,5,l5-trilithioeicosane, l,3,5-trilithiocyclohexane, l,3,5,8-tetralithiodecane, l,5,l0,20-tetralithioeicosane, l,2,4,6-tetralithiocyclohexane, 4,4'-dilithiobiphenyl, and the like.

Mixtures of different lithium catalysts can also be employed, preferably containing one or more lithium compounds such as $R(Li)_{x''}$. The preferred lithium catalyst for use in the present invention is n-butyllithium.

Other lithium catalysts which can be employed are lithium dialkyl amines, lithium dialkyl phosphines, lithium alkyl aryl phosphines and lithium diaryl phosphines.

Oxygen equivalents as herein discussed are the moles in equivalents of oxygen contained in the oxolanyl alkane randomizer rather than the moles of the randomizer compounds. Randomizer dimers contain two equivalents of oxygen per mole while trimers contain three equivalents of oxygen per mole.

The oxygen equivalent ratios of the present invention represents the ratio of the oxygen equivalents of the oxolanyl alkane randomizers to the mole equivalents of organolithium catalyst initiators. The oxygen equivalent ratios utilized in the instant invention can vary from 0.2/I.0 to 2.0/I.0, preferably from 0.5/I.0 to I.5/I.0.

The amount of oxolanyl alkane randomizer as well as its ratio to the organolithium catalyst determines the vinyl content (I,2-microstructure) of the conjugated diene contributed units in the copolymer finally produced. It has been determined that the conjugated diene vinyl aromatic hydrocarbon copolymers produced according to the process of the present invention should have a vinyl content ranging between about ten (I0) to thirty - (30) percent, preferably I0 to 20 percent vinyl content.

The present polymerization system is applicable to solution polymerization techniques which are conducted at temperatures above 0°C., preferably 90° to I60°C. Reaction temperature below 90°C. temperature range normally produce copolymers containing high I,2-microstructure. Reaction temperatures between 70°C. and I40°C. generally produce copolymers containing between I0 and 30 percent of a I,2-microstructure. Any temperature in this range of 0°C. to I60°C. which gives a convenient polymerization rate while producing a copolymer having a I,2-microstructure ranging between I0 and 30 percent is acceptable. If the operation is to be conducted as a batch operation, initiation temperatures of less than 90°C. are preferred. If the operation is to be a continuous operation higher initiation temperatures can be employed, such as I00°C. to I20°C., and it is preferred that the polymerization process be maintained in a range of from 70°C. to 200°C., most preferably I00°C. to I40°C.

The polymerization reaction can be performed at any pressure convenient up to I00 atmospheres. When the desired degree of polymerization has been reached, the copolymer can be isolated by precipitation with a non-solvent such as methanol, isopropanol or water and an appropriate antioxidant can be added at this stage of polymerization. Alternatively, the solution can be injected into a slurry tank containing a hot non-solvent whereupon the solvent is flashed off and the copolymer remains as a slurry with the non-solvent. Alternatively, the solvent can be removed directly by the application of heat and/or flashing to a lower pressure. The number average molecular weight of the final copolymer produced can range from I,000 to 500,000. These copolymers depending on their molecular weight and composition can be used for a variety of applications ranging from molding materials, rubber goods such as tires, and various adhesive applications.

It is believed that one skilled in the art can, using the preceding description, utilize the present invention to its fullest extent. The following preferred specific embodiments are therefore to be construed as merely illustrative of the randomization system and the polymerization process of the present invention.

## EXAMPLE I

The following polymerization batch reactions utilized 2I.9 percent monomer (35% styrene and 65% I,3-butadiene) in hexane in a bottle. The oxolanyl randomizer 2,2-bis(2-oxolanyl) propane - (OOPS) was introduced into the reaction mixture in the amount indicated and butyllithium was added in the amount of I.0 millimole per I00 grams of monomer. The reaction was conducted at the temperature or inclining temperature range indicated. After polymerization was completed the resultant product was tested for vinyl content, bound styrene and block styrene.

| Oxygen Equiv. Ratio | Monomer Conversion | Temp. | Vinyl Content | Bound Styrene | Block Styrene[a] | Approx. "OOPS" Demand (Calculated) |
|---|---|---|---|---|---|---|
| OOPS/ n-BuLi | % | °F. | % | % | % | lbs./1000 lbs. Rubber |
| 0 | 91.6 | 170 | 10.1 | 31.3 | 9.2 | 0 |
| 1 | 93.2 | 170 | 58.0 | 31.0 | 0 | 0.7 |
| 2 | 93.9 | 170 | 64.6 | 31.9 | 0 | 1.4 |

(a) Determined by chemical block analysis (ASTM D 3314-74 Part 37).

## EXAMPLE II

In the following polymerization reactions, the butadiene/styrene copolymerizations were identical to those of Example I except that the reactions were carried out in a one gallon batch reactor

| Oxygen Equiv. Ratio | Temp. | Vinyl Content | Bound Styrene | Block Styrene | |
|---|---|---|---|---|---|
| OOPS/ n-BuLi | °F. | % | % | Chem[b] Block | NMR[c] Block |
| | | ONE GALLON BATCH | | | |
| 0 | 245-275 | 11.9 | 50.0 | 16.0 | 28.4 |
| 0 | 207-255 | 11.0 | 41.6 | 9.2 | 27.0 |
| 0.25 | 208-256 | 14.0 | 43.1 | 4.3 | 23.6 |
| 0.50 | 208-253 | 17.2 | 41.2 | 10.9 | 18.8 |
| 0.75 | 208-249 | 19.7 | 43.8 | 6.1 | 12.1 |
| 1.0 | 208-243 | 24.7 | 35.0 | 0.6 | 1.3 |
| 1.0 | 210-242 | 21.3 | 43.2 | 0.0 | 2.8 |
| 1.0 | 245-275 | 18.3 | 42.1 | 0.2 | 3.4 |
| 2.0 | 209-232 | 30.2 | 46.0 | 0.0 | 0.0 |
| 2.0 | 245-275 | 16.1 | 33.7 | 0.0 | 0.0 |

(b) Determined by chemical block analysis.

(c) Determined by NMR analysis.

## EXAMPLE III

In the following polymerization reactions, the I,3-butadiene/styrene monomer ratio was 60/40 to 50/50 and the reactions were conducted at a temperature of 2I0-275°F. in a one gallon batch reactor in accordance with the procedure of Example I:

| Oxygen Equiv. Ratio | Monomer Conversion | Vinyl Content | Bound Styrene | Block Styrene | |
|---|---|---|---|---|---|
| OOPS/ n-BuLi | % | % | % | Chem Block | NMR Block |
| 0 | 89 | 11.9 | 50.0 | 16.0 | 28.0 |
| 0.5 | 95 | 17.2 | 41.2 | 10.9 | 18.8 |
| 0.75 | 94 | 19.7 | 43.8 | 6.1 | 12.1 |
| 1.0 | 93 | 21.3 | 43.2 | 0.0 | 3.0 |
| 2.0 | 94 | 30.2 | 46.0 | 0.0 | 0.0 |

The above data demonstrates the high efficiency of oligomeric oxolanyl alkanes as a copolymerizing randomizing agent.

It will be evident that various modifications can be made to the process of this invention. These modifications, however, are considered as being within the scope of the invention.

Example IV

In the following polymerization reactions, the butadiene/styrene copolymerizations were identical to those of Example I except that the reactions were carried out in a 50 gallon continuous reactor:

| Oxygen Equiv. Ratio | Temperature | Vinyl Content | Bound Styrene | Block Styrene | |
|---|---|---|---|---|---|
| OOPS/ n-BuLi | °F. | % | % | Chem Block | NMR Block |
| 0 | 200-250 | 14.0 | 27.1 | 8.7 | - |
| 0.64 | 200-250 | 17.0 | 33.7 | 0.2 | - |
| 1.40 | 200-250 | 23.9 | 25.8 | 0.8 | - |
| 1.51 | 200-250 | 28.6 | 31.6 | 1.0 | - |
| 2.0 | 200-244 | 25.9 | 31.5 | 0.0 | - |

**Claims**

I. A process for preparing copolymers which comprises contacting at least one monomer of a conjugated diene having four to I2 carbons per molecule and at least one monomer of a vinyl-substituted aromatic hydrocarbon having from eight to 20 carbon atoms per molecule with a randomizing initiation system comprising an organolithium compound and an oxolanyl alkane selected from the group consisting of:

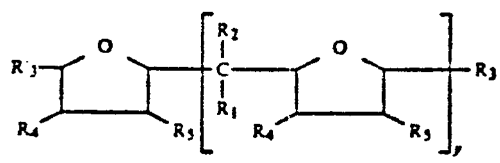

(i)

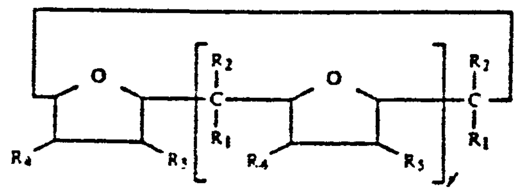

(ii)

wherein $R_1$ and $R_2$ independently are hydrogen or an alkyl group and the total number of carbon atoms in $-CR_1R_2$-ranges between one and nine inclusive; y is an integer of 1 to 5 inclusive, y' is an integer of 3 to 5 inclusive $R_{3'}$, $R_3$, $R_4$ and $R_5$ independently are -H or $-C_nH_{2n+1}$ wherein n = 1 to 6, the oxolanyl alkane being present in a quantity sufficient to promote formation of random copolymers containing a 1,2-vinyl content ranging between 10 and 30 percent and recovering the copolymers.

2. The process as in claim 1 wherein the copolymer is formed from a ratio of monomers of the vinyl substituted aromatic hydrocarbon to the conjugated dienes from 10-50/90-50.

3. The process as in claim 1 wherein the copolymer contains a 1,2-vinyl content ranging between 10 and 20 percent.

4. The process as in claim 1 wherein the conjugated diene is 1,3-butadiene.

5. The process as in claim 1 wherein the vinyl substituted aromatic hydrocarbon is styrene.

6. The process as in claim 1 wherein the oxolanyl alkane is 2,2-bis(2-oxolanyl) propane.

7. The process as in claim 1 wherein the organolithium compound is n-butyllithium.

8. The process as in claim 1 wherein the oxolanyl alkane and the organolithium compounds are present in an oxygen equivalent ratio ranging from 0.2/1.0 to 2.0/1.0.

9. The process as in claim 1 wherein the oxolanyl alkane and the organolithium compounds are present in an oxygen equivalent ratio ranging from 0.5/1.0 to 1.5/1.0.

European Patent Office

# EUROPEAN SEARCH REPORT

Application number

EP 86 11 0619

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| D,X | US-A-4 429 091 (J.E. HALL)<br>* Claims 1,4,6 *<br>----- | 1-9 | C 08 F 236/10<br>C 08 F 4/48 |
| | | | TECHNICAL FIELDS SEARCHED (Int Cl 4) |
| | | | C 08 F |

The present search report has been drawn up for all claims

| Place of search | Date of completion of the search | Examiner |
|---|---|---|
| THE HAGUE | 09-12-1986 | VAN HUMBEECK F.W.C. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document